# EUROPEAN PATENT APPLICATION

(11) **EP 3 913 774 A1**
(43) Date of publication of application: **24.11.2021**
(21) Application number: 21171530.5
(22) Date of filing: 30.04.2021
(51) Int. Cl.: H02K 3/12, H02K 3/30, H02K 3/34, H02K 15/12

(54) **METHOD AND SYSTEM FOR THERMALLY INSULATING PORTIONS OF A STATOR CORE**

(30) Priority: 19.05.2020 US 202016877918
(71) Applicant: GE Aviation Systems LLC, Grand Rapids, MI 49512 (US)
(72) Inventor: YIN, Weijun, Grand Rapids, 49512 (US)
(74) Representative: Openshaw & Co.

(57) **Abstract**

An electric machine stator assembly (54) comprising a stator core (102) including a set of circumferentially-spaced slots (106), and a set of windings (90, 120, 130, 150, 152, 154, 156, 158, 160) each including a first leg (122, 132) and a second leg (124, 134) with a dielectric coating (164, 166, 168, 170, 172, 174) applied onto at least a portion of the windings (90, 120, 130, 150, 152, 154, 156, 158, 160). The windings (90, 120, 130, 150, 152, 154, 156, 158, 160) are further received within at least a portion the set of the slots (106).

## Description

### TECHNICAL FIELD

This disclosure generally relates to thermally conductive insulating portions of a stator core, and more specifically including a set of hairpin windings including a dielectric coating within a portion of the stator core.

### BACKGROUND

Electric machines, such as electric motors or electric generators, are used in energy conversion. In the aircraft industry, it is common to find an electric motor having a combination of motor and generator modes, where the electric machine, in motor mode, is used to start an aircraft engine, and, depending on the mode, also functions as a generator, to supply electrical power to the aircraft systems. Regardless of the mode, an electric machine typically includes a stator with windings that works in conjunction with a rotor, which also has windings and is driven to rotate by a source of rotation. For a generator, the source of rotation can be a gas turbine engine, or for a motor the source of rotation can be the stator.

### BRIEF DESCRIPTION

Aspects of the disclosure relate to an electric machine stator assembly comprising a stator core including a set of slots spaced circumferentially about the stator core and extending axially along the stator core, and a set of windings, each winding of the set of windings including a first leg and a second leg having a dielectric coating formed by way of electrophoretic deposition (EPD), and wherein the first leg and the second leg of each respective winding is received in a different slot of the set of slots of the stator core.

Other aspects of the disclosure relate to an electric machine assembly comprising a drive shaft, a rotor coupled to the drive shaft, a stator core including a set of slots spaced circumferentially about the stator core and extending axially along the stator core, and a set of windings, each winding of the set of windings including a first leg and a second leg, wherein the first leg and the second leg include a dielectric coating formed by way of electrophoretic deposition (EPD), and wherein the first leg and the second leg is received in a different slot of the set of slots.

In another aspect, aspects of this disclosure relate to a method of manufacturing a winding assembly for a stator, the winding assembly including one or more windings, the method comprising applying a dielectric coating to at least a portion of a set of windings through electrophoretic deposition (EPD), curing the dielectric coating on the set of windings, inserting the set of windings into a set of axially extending stator slots of a stator core, and electrically connecting a free end of the set of windings to form a set of stator windings, the free end not including the dielectric coating.

### BRIEF DESCRIPTION OF THE DRAWINGS

In the drawings:
FIG. 1 is an isometric view of a gas turbine engine having a generator, in accordance with various aspects described herein.
FIG. 2 is an isometric view of an exterior of the generator of FIG. 1, in accordance with various aspects described herein.
FIG. 3 is a schematic cross-sectional view of the generator of FIG. 2, taken along line III-III of FIG. 2, in accordance with various aspects described herein.
FIG. 4 is an isometric view of a stator assembly of the generator of FIG. 2, in accordance with various aspects described herein.
FIG. 5 is a zoomed view of the stator core assembly of FIG. 4, taken along section V of FIG. 4, in accordance with various aspects described herein.
FIG. 6 is a schematic view of a set of windings wound in the stator core assembly of FIG. 4, in accordance with various aspects described herein.
FIG. 7 is another schematic cross-sectional view of the stator core assembly of FIG. 4, in accordance with various aspects described herein.
FIG. 8 is an example flow chart diagram demonstrating a method of manufacturing a winding assembly for the stator core assembly FIG. 4, in accordance with various aspects described herein.

### DETAILED DESCRIPTION

Aspects of the disclosure can be implemented in any stator assembly or electric machine assembly having a set of stator slots wound with conductive windings. For purposes of this description, the stator assembly is described with respect to an electric machine, electric machine assembly, generator, or similar apparatus. Furthermore, one or more stator or rotor combinations can be included in the machine. Non-limiting aspects of an electric machine can include an electric generator, an electric motor, a starter/generator, a transformer, an inductor or the like.

While "a set of' various elements will be described, it will be understood that "a set" can include any number of the respective elements, including only one element. As used herein, the terms "axial" or "axially" refer to a dimension along a longitudinal axis of a generator or along a longitudinal axis of a component disposed within the generator.

As used herein, the terms "radial" or "radially" refer to a dimension extending between a center longitudinal axis and an outer circumference of a circular or annular component or reference line disposed thereabout. The use of the terms "proximal" or "proximally," either by themselves or in conjunction with the terms "radial" or "radially," refers to moving in a direction toward the center longitudinal axis, or a component being relatively closer to the center longitudinal axis as compared to another component.

All directional references (e.g., radial, axial, upper, lower, upward, downward, left, right, lateral, front, back, top, bottom, above, below, vertical, horizontal, clockwise, counterclockwise) are only used for identification purposes to aid the reader's understanding of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other.

The exemplary drawings are for purposes of illustration only and the dimensions, positions, order and relative sizes reflected in the drawings attached hereto can vary.

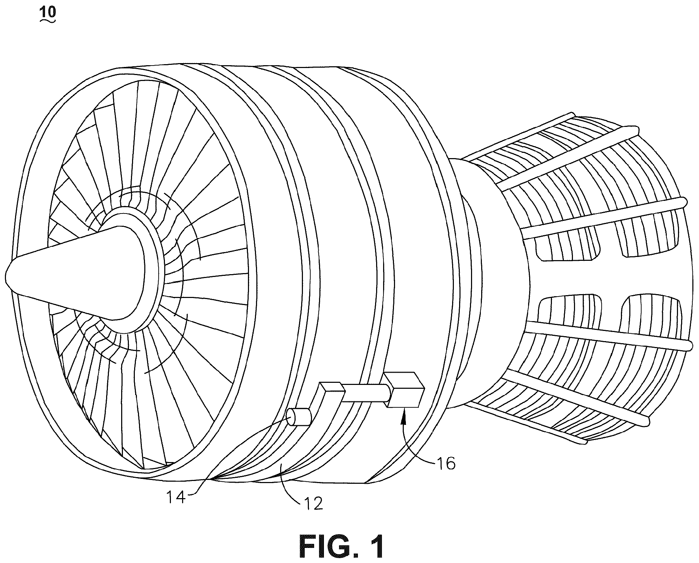

FIG. 1 illustrates a gas turbine engine 10 having an accessory gear box (AGB) 12 and an electric machine such as generator 14 according to an aspect of the disclosure. The gas turbine engine 10 can be a turbofan engine such as ones commonly used in modern commercial aviation or it could be a variety of other known gas turbine engines such as a turboprop or turboshaft. The AGB 12 can be coupled to a turbine shaft (not shown) of the gas turbine engine 10 by way of a mechanical power take off 16. The type and specifics of the gas turbine engine 10 are not germane to the disclosure and will not be described further herein. While a generator 14 is shown and described, it will be appreciated that the generator 14 can be any electric machine including, but not limited to, an electric motor or starter/generator.

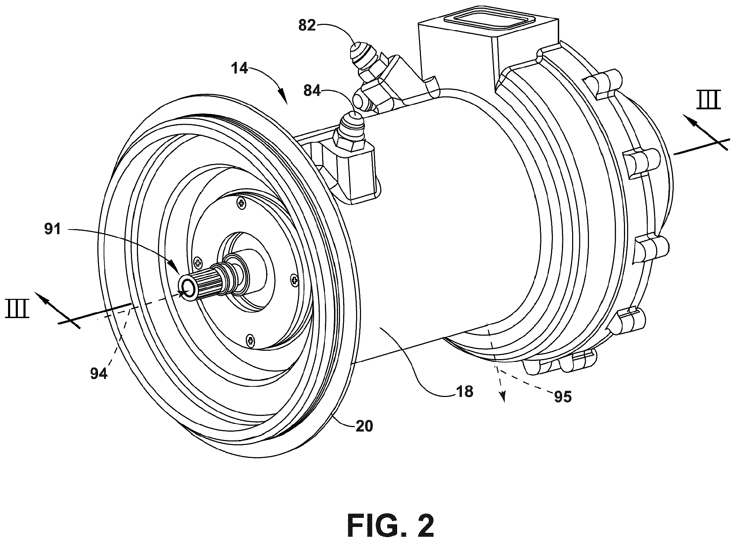

FIG. 2 more clearly illustrates a non-limiting example generator 14 and its housing 18 in accordance with aspects of the disclosure. The generator 14 can include a clamping interface 20, used to clamp the generator 14 to the AGB (not shown). A set of electrical connections can be provided on the exterior of the generator 14 to provide for the transfer of electrical power to and from the generator 14. The set of electrical connections can be further connected by cables to an electrical power distribution node of an aircraft having the gas turbine engine 10 to power various items on the aircraft, such as lights and seat-back monitors. The generator 14 can include a liquid coolant system for cooling or dissipating heat generated by components of the generator 14 or by components proximate to the generator 14, one non-limiting example of which can be the gas turbine engine 10. For example, the generator 14 can include a liquid cooling system that can include, at least, a cooling fluid inlet port 82 and a coolant fluid outlet port 84. The liquid cooling system can further include a second coolant outlet port 91, shown at a rotatable shaft or a drive shaft portion of the generator 14, a drive shaft coolant inlet port 94, or a generator coolant outlet port 95.

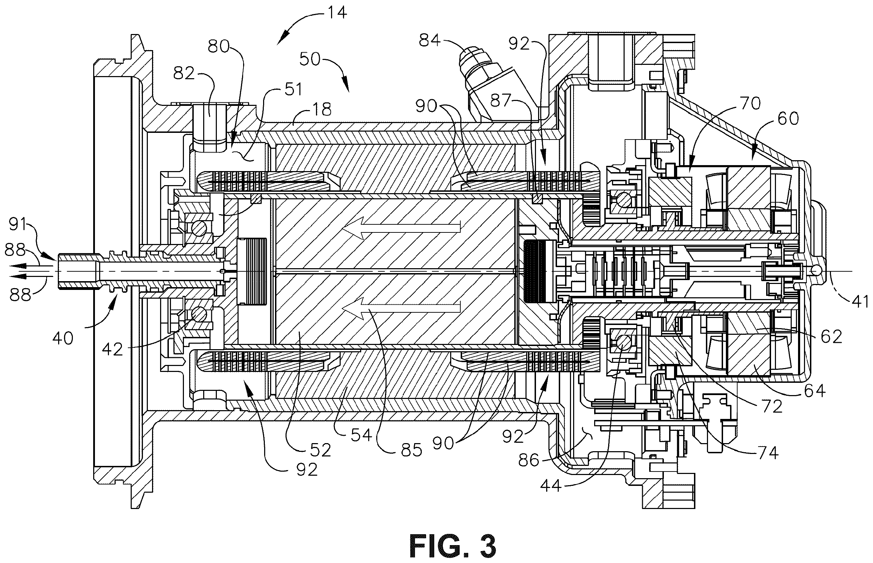

A non-limiting interior of the generator 14 is best seen in FIG. 3, which is a cross-sectional view of the generator 14 shown in FIG. 2 taken along line III-III. A drive shaft 40 is located within the generator 14 and is the primary structure for supporting a variety of components. The drive shaft 40 can have a single diameter or one that can vary along its length. The drive shaft 40 is supported by spaced bearings 42 and 44 and configured to rotate about a rotational axis 41. Several of the elements of the generator 14 have a fixed component and a rotating component, with the fixed component fixed relative to the housing 18 and with the rotating component being provided on, or rotatably fixed relative to the drive shaft 40. Examples of these elements can include a main machine 50 housed within a main machine cavity 51, an exciter 60, and a permanent magnet generator (PMG) 70. The corresponding rotating component comprises a main machine rotor 52, an exciter rotor 62, and a PMG rotor 72, respectively, and the corresponding fixed component comprises a main machine stator assembly 54 or stator assembly, an exciter stator 64, and a PMG stator 74. In this manner, the main machine rotor 52, exciter rotor 62, and PMG rotor 72 are disposed on and co-rotate with the drive shaft 40. The fixed components can be mounted to any suitable part of the housing 18, and include the main machine stator assembly 54, exciter stator 64, and PMG stator 74. Collectively, the fixed components define an interior through which the drive shaft 40 extends and rotates relative to.

It will be understood that the main machine rotor 52, exciter rotor 62, and PMG rotor 72 can have a set of rotor poles, and that the main machine stator assembly 54, exciter stator 64, and PMG stator 74 can have a set of stator poles. The set of rotor poles can generate a set of magnetic fields relative to the set of stator poles, such that the rotation of the rotor magnetic fields relative to the stator poles generate current in the respective stator components.

At least one of the rotor poles and stator poles can be formed by a core with a post and wire wound about the post to form a winding, with the winding having at least one end turn. Aspects of the disclosure shown include at least one set of stator windings 90 arranged longitudinally along the housing 18, that is, in parallel with housing 18 and the rotational axis 41. The set of stator windings 90 can also include a set of stator winding end turns 92 extending axially beyond opposing ends of a longitudinal length of a main machine stator assembly 54. Each of the stator windings 90 can comprise a thermally conductive and electrically conductive material including, but not limited to, copper.

The components of the generator 14 can be any combination of known generators. For example, the main machine 50 can be either a synchronous or asynchronous generator. In addition to the accessories shown in this aspect, there can be other components that need to be operated for particular applications. For example, in addition to the electromechanical accessories shown, there can be other accessories driven from the same drive shaft 40 such as the liquid coolant pump, a fluid compressor, or a hydraulic pump.

As described herein, the generator 14 can be oil cooled and thus can include a cooling system 80. It is further contemplated that the cooling system 80 using oil can also provide for lubrication of the generator 14 The cooling system 80 can further include, for example, a cooling fluid reservoir 86 and various cooling passages. The drive shaft 40 can provide one or more channels or paths for coolant or fluid coolant flow 85 (shown schematically as arrows) for the main machine rotor 52, exciter rotor 62, and PMG rotor 72, as well as an rotor shaft cooling fluid outlet 88, such as the second coolant outlet port 91, wherein residual, unused, or unspent oil can be discharged from the drive shaft 40.

In non-limiting examples of the generator 14, the fluid coolant flow 85 can further be directed, exposed, sprayed, or otherwise deposited onto the set of stator windings 90, the set of stator winding end turns 92, or onto alternative or additional components. In this example, the fluid coolant flow 85 can flow from the drive shaft 40 radially outward toward the set of stator windings 90 or the set of stator winding end turns 92. In this sense, the coolant can cool the respective set of stator windings 90 or set of stator winding end turns 92.

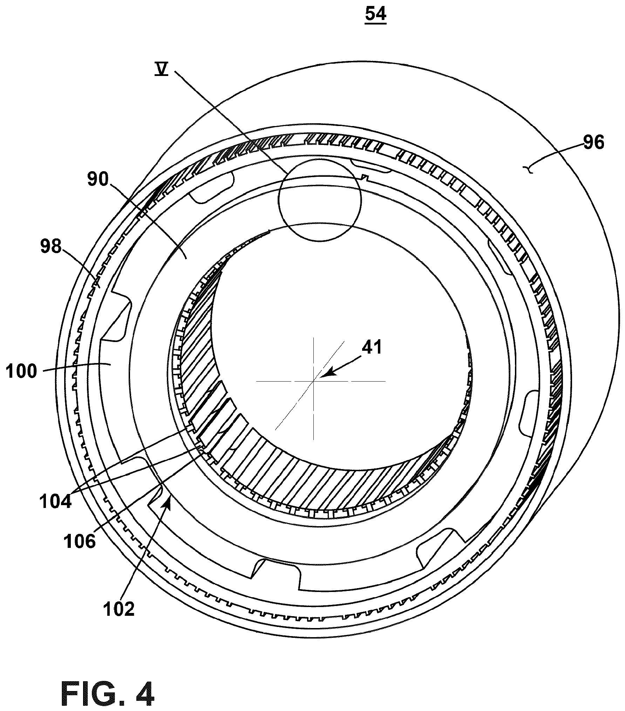

FIG. 4 further illustrates the main machine stator assembly 54 for the main machine of the generator 14 of FIG. 3. While a main machine stator assembly 54 is shown and described, aspects of the disclosure can be applicable or utilized for any stator assembly of an electric machine, including, but not limited to the exciter stator 64, the PMG stator 74, or the like. As shown, in one non-limiting example configuration, the main machine stator assembly 54 can include, in a radially arranged relationship, an outer stator case 96, a stator frame 98, a stator support 100, and a stator core 102. As shown, each of the aforementioned components can be radially arranged about the rotation axis 41 extending in an axial direction relative to the main machine stator assembly 54. As shown, the stator core 102 can include a generally cylindrical form received radially within the stator support 100, also having a generally cylindrical form. The stator support 100 is further radially received, such as via press-fitting, within the stator frame 98, also having a generally cylindrical form. The stator frame 98 can further be radially received, such as via press-fitting within the outer stator case 96 having a generally cylindrical form.

The stator core 102 can further include a set of posts 104 or teeth extending from the stator core 102 radially inward toward the rotational axis 41. The set of posts 104 can further define a set of slots 106, such as openings, gaps, spaces, or the like, between adjacent posts 104. At least a subset of the slots 106 can be wound with a conductive wire or set of conductive wires to form the set of stator windings 90 schematically illustrated in FIG. 4. In one non-limiting example, all of the slots 106 of the set of slots 106 can include at least one stator winding 90. The set of slots 106 can be further defined as a set of stator slots 106.

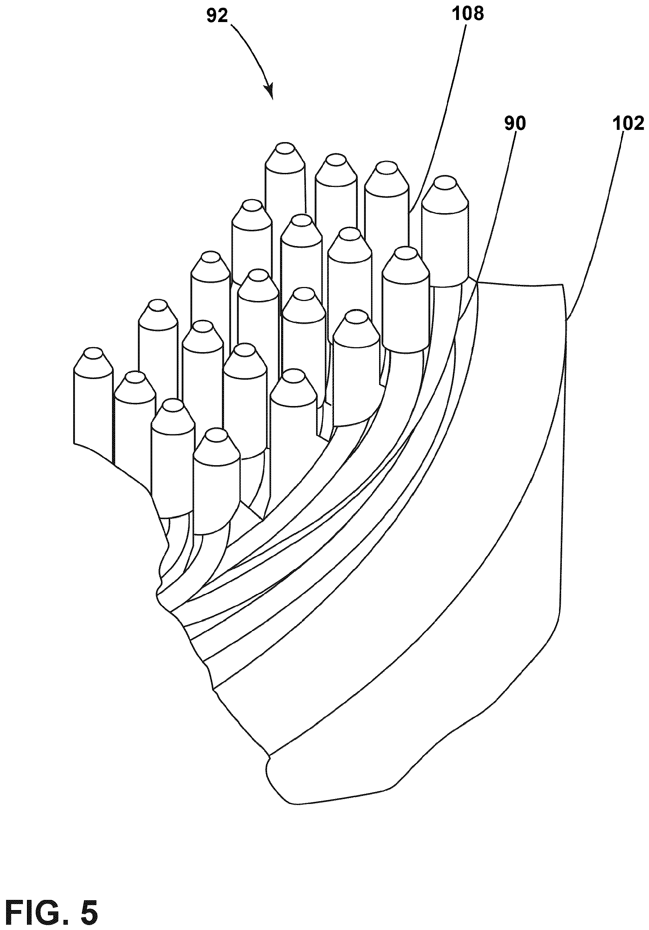

FIG. 5 illustrates a zoomed portion of the stator core 102 of FIG. 4, taken from view V of FIG. 4, illustrating a subset of the stator winding end turns 92. There can be any number of the set of stator windings 90 radially arranged about the stator core 102. As illustrated, each slot 106 (not shown) can include four stator windings 90. The stator windings be radially arranged about the stator core 102 within each corresponding slot 106. It will be appreciated that there can be any number of one or more stator windings 90 within each corresponding slot 106.

At least a portion of ends of the set of stator windings 90 can include a conductively coupled connection between at least two stator windings 90. In one non-limiting example, the conductive connection between at least two stator windings 90 can be overlain with, enveloped, or otherwise insulated by way of a respective non-conductive stator cap, of a set of stator caps 108. In this sense, the set of stator caps 108 can be provided on an axially distal end of the set of stator windings 90. The set of stator caps 108 can be placed over at least a portion of any two or more stator windings 90 and can conductively seal the stator windings 90 together at the axially distal end. Specifically, the stator cap 108 can be a dielectric material or coating. As used herein, dielectric coatings can refer to a layer of material which includes properties such as, but not limited to, a thermally conductive heat transfer. In one non-limiting example, the dielectric coating can include a ceramic polymer composite coating or the like. The dielectric coating can additionally or alternatively include a thermally conductive polymer, polymer composite, or a thermally conductive ceramic.

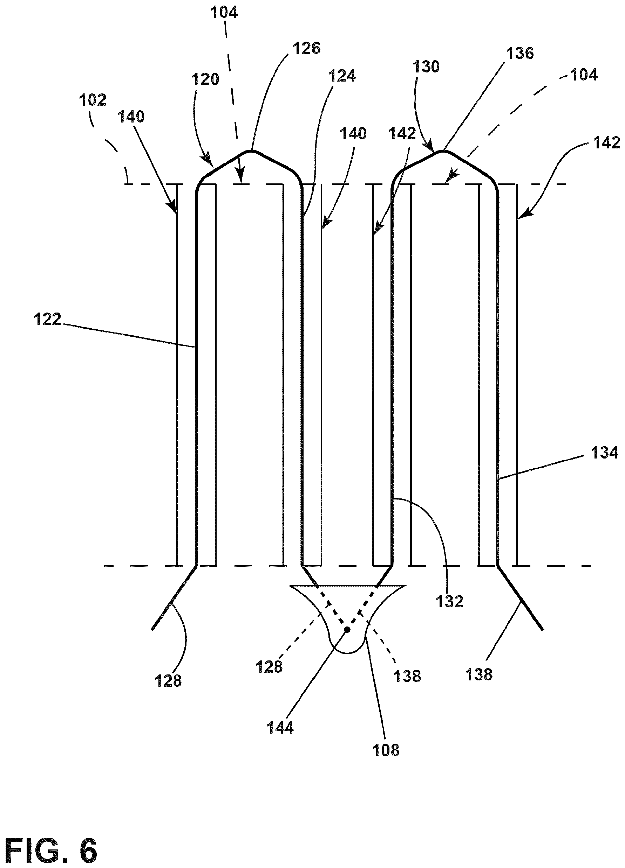

FIG. 6 illustrates a radial schematic view of a portion of the stator core 102 of FIG. 4. As shown, a first stator winding 120 and a second stator winding 130 can be received within a first set of slots 140 and a second set of slots 142, respectively, the slots 140, 142 being separated by the set of posts 104. It will be appreciated that there can be any number of first and second stator windings 120, 130 included in the set of stator windings 90 and that any aspects described herein for the first or second stator windings 120, 130 can be applied to any of the stator windings 90. It will be further appreciated that there can be any number of sets of first and second slots 140, 142 included in the set of slots 106 and that any aspects described herein the first and second slots 140, 142 can be applied to any of slots 106.

As illustrated the first and second stator windings 120, 130 are hairpin windings. However, it will be appreciated that the first and second stator windings 120, 130 can be any type of winding. The first stator winding 120 can include a first leg 122, a second leg 124, a turn 126 of the winding 120 connecting the first leg 122 and the second leg 124 , and two free ends 128 at each respective terminal of the first leg 122 and the second leg 124, the free ends 128 distal from the turn 126. As used herein, a "free" end is distal end of the first stator winding 120 terminating a length of the first stator winding 120. A "free" end can be connected or coupled to further components, as "free" is described relative to the first stator winding 120. The first and second leg 122, 124 can each be received within a respective axial portion of one of the slot of the first set of slots 140 of the stator core 102. The second stator winding 130 can also include a first leg 132, a second leg 134, a turn 136, and two free ends 138 at each respective terminal of the first leg 132 and the second leg 134, the free ends 138 distal from the turn 136. The first and second legs 132, 134 can each be received within a respective slot of the second set of slots 142. At least a portion of stator windings 90 can be received within a corresponding axial portion of one of the slot of the second set of slots 142. The free ends 128, 138 can be conductively connected or joined at a joining region 144 and capped with the stator cap 108. Although illustrated as a physical connection, it will be appreciated that the joining at the joining region 144 can be defined as a region where the free ends 128, 138 are in electrical communication with each other. In other words, the joining region 144 can be defined as an electrical connection between the first stator winding 120 and the second stator winding 130. Once the first windings 120 and the second windings 130 have an electrical connection, they can be defined to form one of the set of stator windings 90.

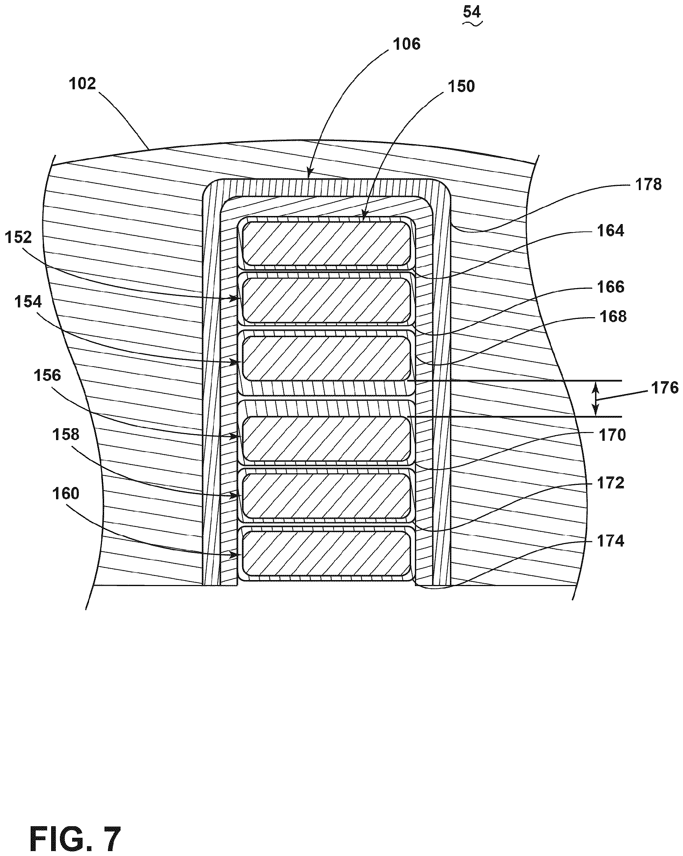

FIG. 7 illustrates a axial-facing cross-sectional view of a portion of the stator assembly of FIG. 4. More specifically, FIG. 7 illustrates an axial-facing cross-sectional view of the set of stator windings 90 received in one of the set of slots 106 of the stator core 102. The slot 106 is shown including or receiving a first winding 150, a second winding 152, a third winding 154, a fourth winding 156, a fifth winding 158, and a sixth winding 160 radially arranged within the slot 106. It will be appreciated that any of the first, second, third, fourth, fifth or sixth windings 150, 152, 154, 156, 158, 160 can be any of the set of stator windings 90 as described herein It will be further appreciated that each of the first, second, third, fourth, fifth or sixth windings 150, 152, 154, 156, 158, 160 could have different cross-sectional areas It will be further appreciated that the slot 106 can be any of the set of slots 106 as described herein.

Each of the first, second, third, fourth, fifth, and sixth windings 150, 152, 154, 156, 158, 160 can include respective dielectric coatings 164, 166, 168, 170, 172, 174. The dielectric coatings 164, 166, 168, 170, 172, 174 can be defined by a thickness which can be uniform axially along or radially between at least a portion of the first, second, third, fourth, fifth, and sixth windings 150, 152, 154, 156, 158, 160 within the slot 106. Alternatively, or additionally, the thickness can be non-uniform along an axial portion or a radial portion between the respectively adjacent windings 150, 152, 154, 156, 158, 160. For example, as illustrated, the relative thickness of the dielectric coatings 164, 166 of the first winding 150 and the second winding 156 can be equal. While the relative thickness of the dielectric coatings 168, 170 of the third winding 154 and the fourth winding 156 can be different, as shown.

Further, the relative thickness of the dielectric coatings 164, 166, 168, 170, 172, 174 can be varied between sides of a single corresponding winding. For example, as illustrated, the dielectric coating 168 is non-uniform between a first radially outward side of the third winding 154 relative to a second radially inward side of the third winding 154. In this non-limiting example, the first radially outward side of the third winding 154 can include a thinner dielectric coating 168 relative to the dielectric coating 168 thickness of the second radially inward side. Specifically, the thickness of dielectric coatings, such as 168 and 170, between adjacent sides of the third and fourth windings 154, 156, can include an increased thickness of the coatings 168, 170 defined by region 176. In one non-limiting example, the region 176 can act as an insulation layer, or as a collectively increased insulation layer between the third and the fourth windings 154, 156. This can be included in various scenarios where it can be beneficial to include an increased or thicker insulation layer. For example, it may be beneficial to ensure that all of the stator windings 90 received in the slot 106 are of a singular phase, or where they are not, that different stator winding 90 phases are isolated from each other. The thicker insulation layer can ensure phase separation where higher voltages occur. As such, the thicker insulation can help in eliminating an additional phase separator as discussed herein. In one non-limiting example, the dielectric coating can be formed, applied, or layered relative to the set of stator windings 90 by various methods such as, but not limited to, electrophoretic deposition (EPD).

It is further contemplated that the slot 106 can include a dielectric slot liner 178 similar to the dielectric coatings 164, 166, 168, 170, 172. The dielectric slot liner 178 can be configured to keep the windings 150, 152, 154, 156, 158, 160 from conductively contacting the stator core 102. The dielectric slot liner 178 can provide another thermally conductive layer of the corresponding slot 106 in instances where it is limited how thick dielectric coating 164, 166, 168, 170, 172 can be. Having both the dielectric slot liner 178 on the slot 106 and the dielectric coatings 164, 166, 168, 170, 172 can help improve the thermally conductive properties of the electric machine.

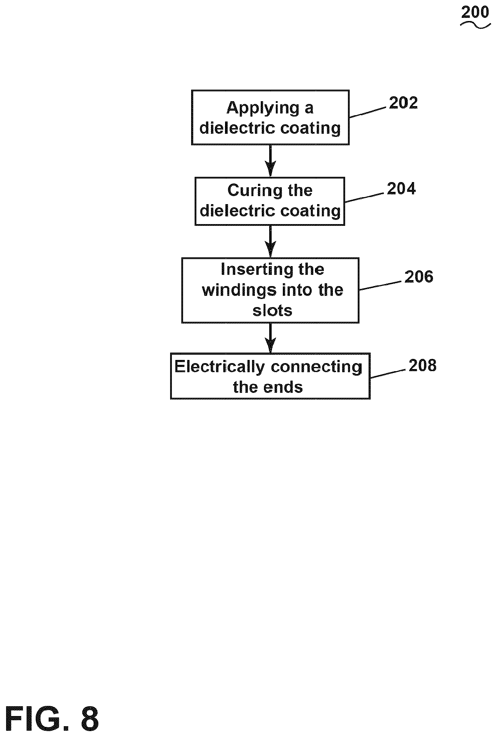

FIG. 8 is a non-limiting example method 200 of forming the main machine stator assembly 54 of FIG. 4, in accordance with aspects of this disclosure. The method 200 can begin with applying the dielectric coating 164, 166, 168, 170, 172 to at least a portion of the stator winding 90, at 202. In one non-limiting example the applying of the dielectric coating 164, 166, 168, 170, 172 can be formed, applied, or layered relative to the set of stator windings 90 by various methods such as, but not limited to, EPD. The dielectric coating 164, 166, 168, 170, 172 can be applied to any region of the stator winding 90 such as the first and the second leg. It can be beneficial in some instances to leave portions of the stator windings 90 uncoated. For example, the free ends 128 can remain uncoated when applying the dielectric coating 164, 166, 168, 170, 172, so that a conductive end can be exposed, to be later conductively connected with a further component, such as another stator winding 90, at a later step. The conductively connected free ends 128 can further be coated at another step or time. The stator winding 90 coated with the dielectric coating 164, 166, 168, 170, 172 can then be cured, at step 204. This can be enabled, accomplished, performed, or the like, by subjecting the stator winding 90 to high temperatures for an extended amount of time. The stator windings 90 can then be inserted or wound into corresponding slots 106 of the stator core 102 with the turns and free ends 128 axially displaced from the stator core 102 at their respective axial positions, at 206. The inserting of the stator windings 90 into the slots 106 can be accomplished in various ways such as, for example, radially stacking two or more stator windings 90 within the slot 106. Finally, the free ends 128 of the stator windings 90 can be electrically connected, at 208.

The sequence depicted is for illustrative purposes only and is not meant to limit the method 200 in any way as it is understood that the portions of the method can proceed in a different logical order, additional or intervening portions can be included, or described portions of the method can be divided into multiple portions, or described portions of the method can be omitted without detracting from the described method. For example, the method 200 can include various other steps. Before applying the dielectric coating 164, 166, 168, 170, 172 to at least a portion of the stator winding 90, at 202, it can be beneficial to strip the stator winding 90 clear of any particulate matter to ensure for an increased electrical or thermal conductivity. It is further contemplated that further steps are envisioned after the connection of the free ends 128, at 208. For example, the free ends 128 can be coated with an additional layers, or different compositions of layers, of an additional dielectric coating, such as through EPD methods. This step can form the stator cap 108 as described herein. Once the additional layer of dielectric coating has been applied to the free ends 128 at step 208, the additional layer of dielectric coating can then be cured through the aspects of the disclosure described herein.

The method 200 described are advantageous to use over conventional methods of forming a stator assembly. For example, through the use of the application of the dielectric coating through the EPD method, the windings can see increased performance parameters when compared to conventional windings. Increased performance parameters, as used herein, can include, but are not limited to, a thermally conductive coating having higher heat transfer. Higher heat transfer can result in better cooling of the windings in a relatively smaller (or similar sized) electric machine, which can further result in a higher power density for the electric machine. The application of the dielectric coating further allows for a larger amount of the slots to be filled (compared with empty portions of a cavity) with the windings, specifically the electrically conductive material or conductor such as copper. With the increase in the amount of the conductor within the slot, winding losses can be minimized. By filling a larger ratio or space of the slots with the windings, or conductor, a reduction in electrical losses is achieved which can result in the increase in the overall efficiency of the electric machine.

In another non-limiting advantage, through the use of EPD, it is possible to more accurately vary the thickness of the dielectric coating along any portion of the windings within the slot. As such, thickened insulation layers can be included and tuned to eliminate the need for a phase separator to be placed within the electric machine or the slot. As used herein, the term tuned can be defined as an adjustment or change based on the parameters of the electric machine as described herein. For example, conventional systems can require that the phase separator (e.g., phase paper) be placed in between two adjacent windings. The use of the dielectric coating applied through EPD allows for a selective placement of areas of thicker insulation layers in place of the phase separator. As such, the process described herein eliminates the need for phase paper, which in turn opens up more room within the slots for the windings to fill.

Many other possible aspects and configurations in addition to that shown in the above figures are contemplated by the present disclosure.

To the extent not already described, the different features and structures of the various aspects can be used in combination with others as desired. That one feature cannot be illustrated in the aspects is not meant to be construed that it cannot be, but is done for brevity of description. Thus, the various features of the different aspects can be mixed and matched as desired to form new aspects, whether or not the new aspects are expressly described. All combinations or permutations of features described herein are covered by this disclosure.

This written description uses examples to disclose aspects of the disclosure, including the best mode, and also to enable any person skilled in the art to practice the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the invention are provided by the subject matter of the following clauses:

An electric machine stator assembly comprising a stator core including a set of slots spaced circumferentially about the stator core and extending axially along the stator core, and a set of windings, each winding of the set of windings including a first leg and a second leg having a dielectric coating formed by way of electrophoretic deposition (EPD), and wherein the first leg and the second leg of each respective winding is received in a different slot of the set of slots of the stator core.

The electric machine stator assembly of any preceding clause wherein the dielectric coating is a ceramic polymer composite coating.

The electric machine stator assembly of any preceding clause wherein the set of slots includes a dielectric slot liner.

The electric machine stator assembly of any preceding clause wherein the set of windings include a first winding and a second winding.

The electric machine stator assembly of any preceding clause wherein the dielectric coating of the first winding has a first thickness and the dielectric coating of the second winding has a second thickness.

The electric machine stator assembly of any preceding clause wherein the first thickness and the second thickness are non-uniform along an axial or radial portion along the first winding or the second winding.

The electric machine stator assembly of any preceding clause wherein the first winding and the second windings are adjacent one another such that the first thickness and the second thickness between adjacent sides of the first winding and the second winding can form an insulation layer.

The electric machine stator assembly of any preceding clause wherein the first thickness and the second thickness can be tuned to eliminate phase separation.

The electric machine stator assembly of any preceding clause wherein each of the set of windings includes an end of at least one of the first leg or the second leg, and wherein the end is defined by a portion of the winding free of the dielectric coating.

The electric machine stator assembly of any preceding clause wherein the set of windings is a set of hairpin windings.

An electric machine assembly comprising a drive shaft, a rotor coupled to the drive shaft, a stator core including a set of slots spaced circumferentially about the stator core and extending axially along the stator core, and a set of windings, each winding of the set of windings including a first leg and a second leg, wherein the first leg and the second leg include a dielectric coating formed by way of electrophoretic deposition (EPD), and wherein the first leg and the second leg is received in a different slot of the set of slots.

The electric machine assembly of any preceding clause wherein the dielectric coating is a ceramic polymer composite coating.

The electric machine assembly of any preceding clause wherein the dielectric coating of the first leg has a first thickness and the dielectric coating of the second leg has a second thickness.

The electric machine assembly of any preceding clause wherein the first thickness and the second thickness are non-uniform along an axial or radial portion along the first leg or the second leg.

The electric machine assembly of any preceding clause wherein each of winding of the set of windings includes an end of at least one of the first leg or the second leg, the end defined by a portion of the winding free of the dielectric coating.

The electric machine assembly of any preceding clause wherein the set of windings is a set of hairpin windings.

A method of manufacturing a winding assembly for a stator, the winding assembly including one or more windings, the method comprising applying a dielectric coating to at least a portion of a set of windings through electrophoretic deposition (EPD), curing the dielectric coating on the set of windings, inserting the set of windings into a set of axially extending stator slots of a stator core, and electrically connecting a free end of the set of windings to form a set of stator windings, the free end not including the dielectric coating.

The method of any preceding clause wherein inserting the set of windings into a portion of the stator comprises radially stacking the set of windings within the portion of the stator core.

The method of any preceding clause further comprising applying an additional layer of dielectric coating to the ends of each winding of the set of windings after they have been electrically connected.

The method of any preceding clause further comprising curing the free ends of the set of windings.

## Claims

1. An electric machine stator assembly (54) comprising:
a stator core (102) including a set of slots (106) spaced circumferentially about the stator core (102) and extending axially along the stator core (102); and
a set of windings (90, 120, 130, 150, 152, 154, 156, 158, 160), each winding (90, 120, 130, 150, 152, 154, 156, 158, 160) of the set of windings (90, 120, 130, 150, 152, 154, 156, 158, 160) including a first leg (122, 132) and a second leg (124, 134) having a dielectric coating (164, 166, 168, 170, 172, 174) formed by way of electrophoretic deposition (EPD), and wherein the first leg (122, 132) and the second leg (124, 134) of each respective winding (90, 120, 130, 150, 152, 154, 156, 158, 160) is received in a different slot (106) of the set of slots (106) of the stator core (102).

2. The electric machine stator assembly (54) of claim 1, wherein the dielectric coating (164, 166, 168, 170, 172, 174) is a ceramic polymer composite coating.

3. The electric machine stator assembly (54) of claim 1 or 2, wherein the set of slots (106) includes a dielectric slot liner (178).

4. The electric machine stator assembly (54) of any of claims 1-3, wherein the set of windings (90, 120, 130, 150, 152, 154, 156, 158, 160) include a first winding (90, 120, 130, 150, 152, 154, 156, 158, 160) and a second winding (90, 120, 130, 150, 152, 154, 156, 158, 160).

5. The electric machine stator assembly (54) of claim 4, wherein the dielectric coating (164, 166, 168, 170, 172, 174) of the first winding (90, 120, 130, 150, 152, 154, 156, 158, 160) has a first thickness and the dielectric coating (164, 166, 168, 170, 172, 174) of the second winding (90, 120, 130, 150, 152, 154, 156, 158, 160) (90, 120, 130, 150, 152, 154, 156, 158, 160) has a second thickness.

6. The electric machine stator assembly (54) of claim 5, wherein the first thickness and the second thickness are non-uniform along an axial or radial portion along the first winding (90, 120, 130, 150, 152, 154, 156, 158, 160) or the second winding (90, 120, 130, 150, 152, 154, 156, 158, 160).

7. The electric machine stator assembly (54) of claim 5 or 6, wherein the first winding (90, 120, 130, 150, 152, 154, 156, 158, 160) and the second winding (90, 120, 130, 150, 152, 154, 156, 158, 160)s (90, 120, 130, 150, 152, 154, 156, 158, 160) are adjacent one another such that the first thickness and the second thickness between adjacent sides of the first winding (90, 120, 130, 150, 152, 154, 156, 158, 160) and the second winding (90, 120, 130, 150, 152, 154, 156, 158, 160) (90, 120, 130, 150, 152, 154, 156, 158, 160) can form an insulation layer (176).

8. The electric machine stator assembly (54) of any of claims 6-7, wherein the first thickness and the second thickness can be tuned to eliminate phase separation.

9. The electric machine stator assembly (54) of any of claims 1-8, wherein each of the set of windings (90, 120, 130, 150, 152, 154, 156, 158, 160) includes an end (128, 138) of at least one of the first leg (122, 132) or the second leg (124, 134), and wherein the end (128, 138) is defined by a portion of the winding (90, 120, 130, 150, 152, 154, 156, 158, 160) free of the dielectric coating (164, 166, 168, 170, 172, 174).

10. The electric machine stator assembly (54) of any of claims 1-9, wherein the set of windings (90, 120, 130, 150, 152, 154, 156, 158, 160) is a set of hairpin windings (90, 120, 130, 150, 152, 154, 156, 158, 160).

11. An electric machine assembly (14, 50) comprising:
a drive shaft (40);
a rotor (52) coupled to the drive shaft (40);
a stator core (102) including a set of slots (106) spaced circumferentially about the stator core (102) and extending axially along the stator core (102); and
a set of windings (90, 120, 130, 150, 152, 154, 156, 158, 160), each winding (90, 120, 130, 150, 152, 154, 156, 158, 160) of the set of windings (90, 120, 130, 150, 152, 154, 156, 158, 160) including a first leg (122, 132) and a second leg (124, 134), wherein the first leg (122, 132) and the second leg (124, 134) include a dielectric coating (164, 166, 168, 170, 172, 174) formed by way of electrophoretic deposition (EPD), and wherein the first leg (122, 132) and the second leg (124, 134) is received in a different slot (106) of the set of slots (106).

12. The electric machine assembly (14, 50) of claim 11, wherein the dielectric coating (164, 166, 168, 170, 172, 174) is a ceramic polymer composite coating.

13. The electric machine assembly (14, 50) of any of claims 11-12, wherein the dielectric coating (164, 166, 168, 170, 172, 174) of the first leg (122, 132) has a first thickness and the dielectric coating (164, 166, 168, 170, 172, 174) of the second leg (124, 134) has a second thickness.

14. The electric machine assembly (14, 50) of claim 13, wherein the first thickness and the second thickness are non-uniform along an axial or radial portion along the first leg (122, 132) or the second leg (124, 134).

15. A method (200) of manufacturing a winding assembly for a stator (54), the winding assembly including one or more windings (90, 120, 130, 150, 152, 154, 156, 158, 160), the method comprising:
applying (202) a dielectric coating (164, 166, 168, 170, 172, 174) to at least a portion of a set of windings (90, 120, 130, 150, 152, 154, 156, 158, 160) through electrophoretic deposition (EPD);
curing (204) the dielectric coating (164, 166, 168, 170, 172, 174) on the set of windings (90, 120, 130, 150, 152, 154, 156, 158, 160);
inserting (206) the set of windings (90, 120, 130, 150, 152, 154, 156, 158, 160) into a set of axially extending stator slots (106) of a stator core (102); and
electrically (208) connecting a free end (128, 138) of the set of windings (90, 120, 130, 150, 152, 154, 156, 158, 160) to form a set of stator windings, the free end (128, 138) not including the dielectric coating (164, 166, 168, 170, 172, 174).
